Europäisches Patentamt

European Patent Office

Office européen des brevets

(19)

(11) EP 0 814 558 A2

(12) EUROPEAN PATENT APPLICATION

(43) Date of publication:
29.12.1997 Bulletin 1997/52

(51) Int Cl.⁶: H02K 19/10

(21) Application number: 97303722.9

(22) Date of filing: 02.06.1997

(84) Designated Contracting States:
AT BE CH DE DK ES FI FR GB GR IE IT LI LU MC NL PT SE

(30) Priority: 18.06.1996 KR 9622096

(71) Applicant: Samsung Electronics Co., Ltd.
Suwon-City, Kyungki-do 441-742 (KR)

(72) Inventor: Kim, Ki-Bong
Suwon-city, Kyungki-do (KR)

(74) Representative: Read, Matthew Charles et al
Venner Shipley & Co.
20 Little Britain
London EC1A 7DH (GB)

(54) **Switched reluctance motor**

(57)     A low noise switched reluctance motor is configured to smooth the production of torque as a function of rotor angular position. This is achieved variously by increasing the number of poles, specially shaping the rotor pole or a combination of the two.

# FIG.4

EP 0 814 558 A2

## Description

The present invention relates to a switched reluctance motor comprising a stator and a rotor, each having a plurality of poles.

In recent years there has been an intensive search for an switched reluctance motor having several advantages over induction motors and permanent magnet dc motors. However, switched reluctance motors have been found to suffer from vibration. Therefore, much research has been directed to reducing the vibration generated in switched reluctance motors. To this end, new physical structures and circuits have been proposed but without success.

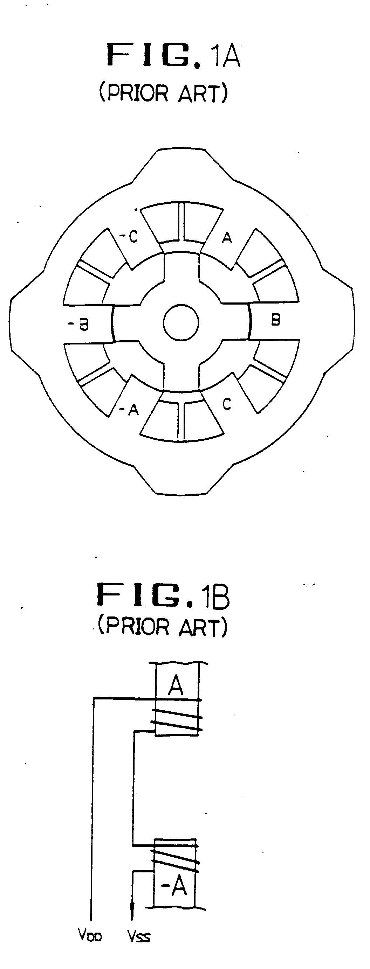

Figure 1 A shows a conventional three-phase switched reluctance motor which has six stator poles and four rotor poles. Figure 1B shows the configuration of the windings of the A-phase stator poles.

Referring to Figures 1A and 1B, a 6/4 poles switched reluctance motor has six stator poles and four rotor poles. When the A-phase is excited, to stator poles comprising A- and -A-phase coils connected in series are excited. The A- and -A-phase windings are arranged such that their inwardly directed ends are respectively north and south poles or vice versa.

The 6/4 poles switched reluctance motor generates torque using only two of its poles at any time, giving a 180° geometrical torque distribution. Induction and 3-phase synchronous motors on the other hand generate torque evenly around the circumference of the rotor.

Furthermore, the torque produced in the 6/4 poles switched reluctance motor varies in dependence on the rotor's angular position. The torque can also be resolved into into tangential and radial components which differ in magnitude in dependence on the angular position of the rotor. The tangential component causes the rotor to turn whereas the radial component tries to displace the rotor from its axis. The changing magnitude of the radial component causes the unwanted vibrations.

The torque generated by a switched reluctance motor can be approximated by:

$$T = \frac{1}{2}\left(\frac{dL}{d\theta}\right)i^2 \tag{1}$$

where, $\frac{dL}{d\theta}$ is the rate of change of inductance with rotor angular position.

From equation (1) it can be seen that, if the inductance is varied smoothly, the torque generated will also vary snoothly. The important consideration for achieving smoothly varying torque is the configuration of the stator and rotor poles.

When the motor is started, there is initially a very low inductance because there is a large angle between stator and rotor poles. As the rotor rotates, rotor poles come into alignment with stator poles causing an increase in inductance. Once the rotor and stator poles have overlapped to some degree futher movement to the completely aligned position produces only a vary small increase in inductance.

A switched reluctance motor according to the present invention is characterised in that the poles of the rotor are configured to smooth output torque as a function of rotor angular position. This may be achieved by having the rotor poles chamfered so as to reduce the length of their pole faces in the direction of rotation of the rotor. Alternatively, the rotor poles may be flared so as to increase the length of their pole faces in the direction of rotation of the rotor. In any case, having an even number of stator poles greater than 6 and an even number of rotor poles greater than 8 is desirable. Preferably, however, a motor according to the present invention has a 12-pole stator and an 8-pole rotor.

Embodiments of the present invention will now be described, by way of example, with reference to Figures 2 to 11 of the accompanying drawings, in which:

Figure 1A is a cross-sectional view of a conventional 6/4 poles switched reluctance motor;
Figure 1B shows the A-phase windings of the motor of Figure 1A;
Figure 2 is a circuit diagram of a driving circuit for a switched reluctance motor;
Figure 3A is a cross-sectional view of a first motor according to the present invention;
Figure 3B shows the A-phase windings of the motor of Figure 3A;
Figure 4 is a cross-sectional view of a second motor according to the present invention;
Figure 5 is a cross-sectional view of a third motor according to the present invention;
Figure 6 shows a detail of the motor shown in Figure 3A;
Figure 7 illustrates the magnetic flux distribution of a conventional switched reluctance motor;
Figure 8 illustrates the magnetic flux distribution of the motor of Figure 3A;
Figure 9 illustrates the magnetic flux distribution of the motor of Figure 5;

Figure 10 is a plot of inductance against rotor angular position for a conventional switched reluctance motor and the motor of Figure 5; and

Figure 11 is a plot of $\frac{dL}{d\theta}$ against rotor angular position for a conventional switched reluctance motor and the motor of Figure 5.

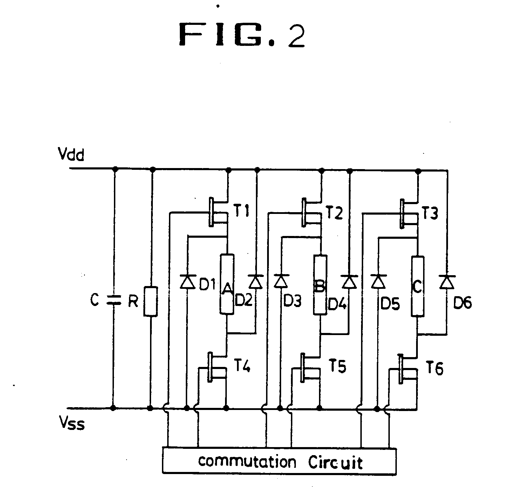

Referring to Figure 2, a switched reluctance motor drive circuit consists of three phase coils A, B, C and three pairs of switching element T1, T2, T3, T4, T5, T6, each pair being arranged for switching the current in one of the coils A, B, C. Two switching elements T1, T4 are connected in series with coil A, switching elements T2, T5 are connected in series with coil B and switching elements T3, T6 are connected in series with coil C. The switching elements T1, T2, T3, T4, T5, T6 are operated to sequentially apply a dc voltage across each coil A, B, C. A capacitor C1 is connected between the power supply lines Vdd, Vss of the drive circuit. Each coil A, B, C has associated therewith pairs of diodes D1, D2, D3, D4, D5, D6 for protecting the switching elements T1, T2, T3, T4, T5, T6 against back emfs generated in the coils A, B, C, when switching elements T1, T2, T3, T4, T5, T6 are switched off, by providing current paths to the capacitor C1. Each coil A, B, C comprises the windings on the poles of one phase connected in series.

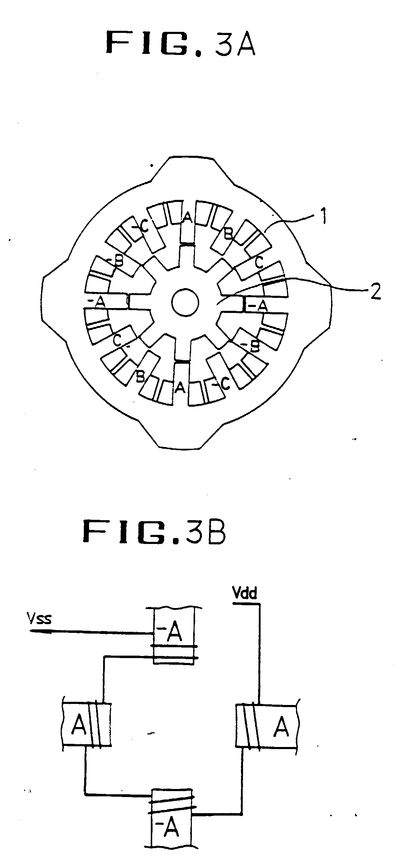

Referring to Figure 3A, a switched reluctance motor comprises twelve stator poles and 8 rotor poles and is hereinafter referred to as a 12/8 poles switched reluctance motor. The stator 1 comprises 2N poles, i.e. 12 poles, amd the rotor has 2N poles, i.e. eight poles.

Referring to Figure 3B, the coils of one phase are wound onto four poles of the stator, rather than two as in the case of the switched reluctance motor of Figure 1. The result is a $\frac{360°}{(2 \times 2)}$, i.e. 90°, angular distribution period for the torque produced.

While the preferred embodiment of Figure 3A has twelve stator poles and eight rotor poles, a switched reluctance motor according to the present invention may have poles selcted from any N multiple, for example 3N, in number. An increment in poles makes it difficult to control the design due to smaller controllable angles, so it is required to increase the number of both stator and rotor pole with an appropriate multiplier.

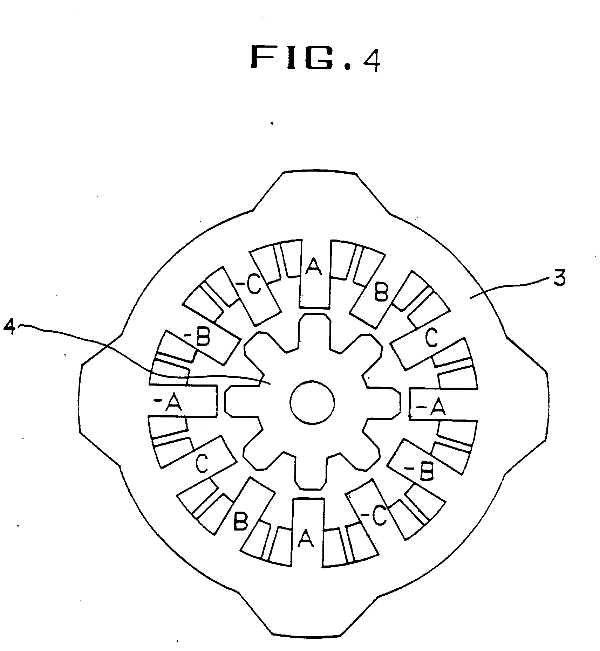

Referring to Figure 4, a second embodiment of the present embodiment is the same as shown in Figure 3A except that the edges of the rotor poles, parallel to the axis of the rotor, are chamfered. The chamfers smooth the minimum in a plot of reluctance with rotor angular position and reduces the torque ripple.

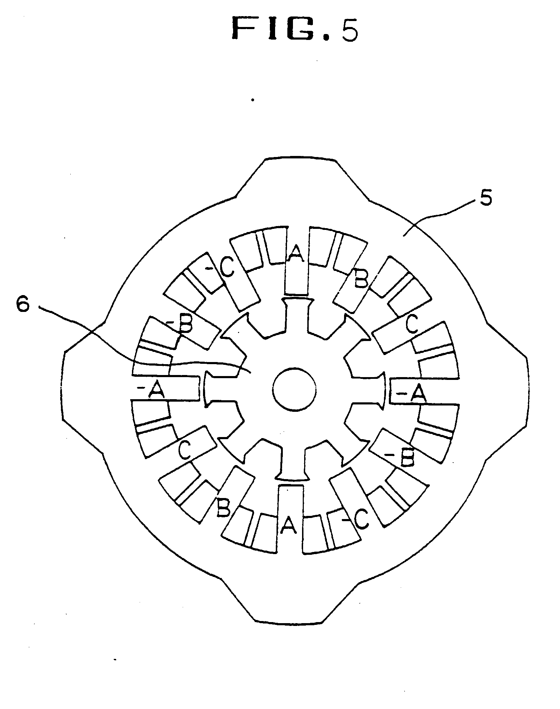

Referring to Figure 5, a switched reluctance motor comprises a stator 5 having 12 poles and a rotor 6 having 8 poles. Each of the rotor pole is flared at its end facing the stator to circumferentially enlarge its end face. This configuration results in a larger magnetic flux when the motor is energised and the inductance varies more smoothly with rotor angular position. Consequently, torque ripple and vibration are reduced.

The operation of a switched reluctance motor according to the present invention will now be described.

Referring again to Figure 2, the swithing elements T1, T2, T3, T4, T5, T6 comprise N-channel MOSFETs. The switching elements T4, T5, T6 are turned on and off by pulse width modulated signals and the switching elements T1, T2, T3 are turned on by a signal from a rotor position sensor.

A rotor position detecting device is required and a rotary encoder is usually employed for this purpose. However, Hall-effect sensors and photo-interrupters are also used.

Since high voltages occur across the phase windings, the gates of switching elements T1, T2, T3 should not have the same common as the switching elements T4, T5, T6. Integrated gate control drivers are employed.

The 12:8 stator to rotor pole ratio means that torque is concurrently generated by four stator poles, giving a 90° torque distribution period. This distribution is more uniform than in the case of a 6/4 switched reluctance motor resulting in reduced vibration.

Each stator pole has only half of the number of turns wound on it compared with a 6/4 switched reluctance motor. Accordingly, the impedance of the windings is unchanged.

At an arbitrary rotor angular position, the torque can be resolved into two components: tangential $T_T$ and radial $T_R$. If a rotor pole is aligned with a stator pole, the tangential component $T_T$ is zero.

The radial component has negative and positive components $-T_R$, $+T_R$. The smaller the difference in the magnitude of these components, the lower the torque ripple which makes it possible to further reduce vibration of the motor.

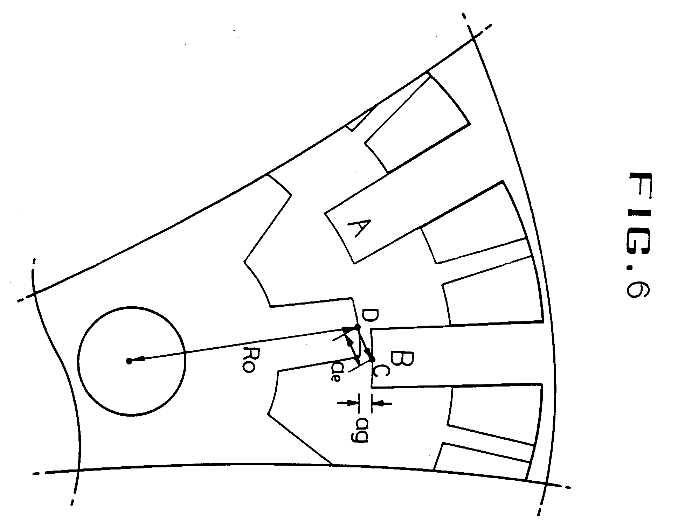

Referring to Figure 6, the torque is considered to act at points C and D.

Assuming that "$R_0$" is the effective radius of the rotor pole, "ag" the air-gap between the rotor and stator poles, and "$a_e$" the effective distance between the stator and rotor poles, i.e. the distance between points C and D, the following inequalities hold true:

$$\sqrt{R_o^2 + a_e^2} > R_0 + ag, \text{ for } -T_R \qquad (2)$$

$$\sqrt{R_o^2 + a_e^2} < R_0 + ag, \, for \, -T_R \tag{3}$$

From (2), one obtains:

$$a_e > ag\sqrt{1 + \frac{2R_0}{ag}} \tag{4}$$

From (4) it can be seen that $T_R$ tends to become smaller as the effective distance between the stator and rotor pole "$a_e$" becomes smaller. Thus, for switched reluctance motors of the same size, increasing the number of stator and rotor poles reduces "$a_e$" and thereby reduces torque ripple.

A further reduction in torque ripple is obtained by means for the rotor pole shapes of the second and third embodiments described above.

The noise levels produced by the third embodiment (SRM II), a 6/4 three-phase switched reluctance motor (SRM I) and an induction motor (IM) were compared. The results of this comparison were as follows:

|  |  | SRM I | SRM II | IM |
|---|---|---|---|---|
| without load | RPM | 1716 | 1707 | 1772 |
|  | noise (dB) | 47.9 | 36.4 | 52.1 |
| with load | RPM | 1380 | 1380 | 1380 |
|  | noise (dB) | 72.7 | 59.1 | 60.6 |

From the above, it can be seen that a switched reluctance motor according to the present invention produces significantly less noise than a 6/4 switched reluctance motor. Even when under load, the switched reluctance motor according to the present invention produces less noise than the induction motor (IM).

In order to minimize torque ripple throughout the rotation of the rotor, the slope of $\frac{dL}{d\theta}$ should be as smooth as possible. Investigation of the pattern brought the conclusion that the inductance deviation at the turn-on angle should be smoother. Consequently, the rotor poles were modified as shown in Figure 5. The effect of the modification shown in Figure 5 was an increase in flux strength at the turn-on angle, smoothing the inductance curve.

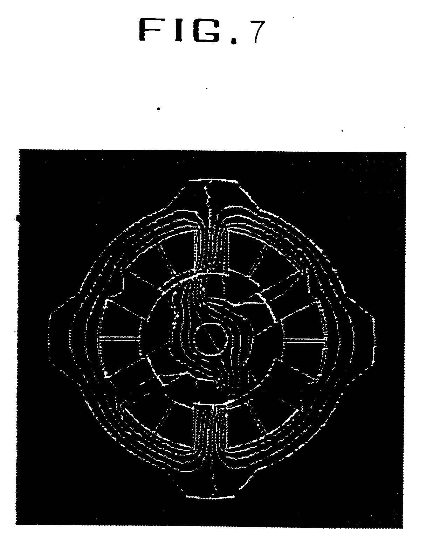

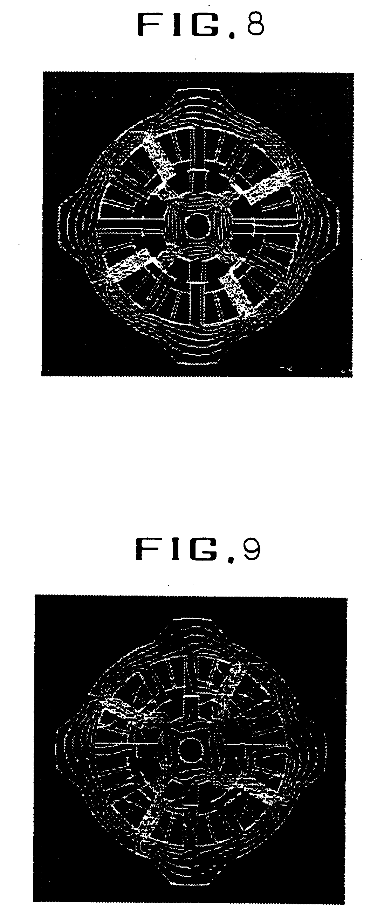

Referring to Figures 7 to 9, it can be seen that the flux is stronger at the turn-on angle in the first and third embodiment of the present invention than in a conventional 6/4 switched reluctance motor.

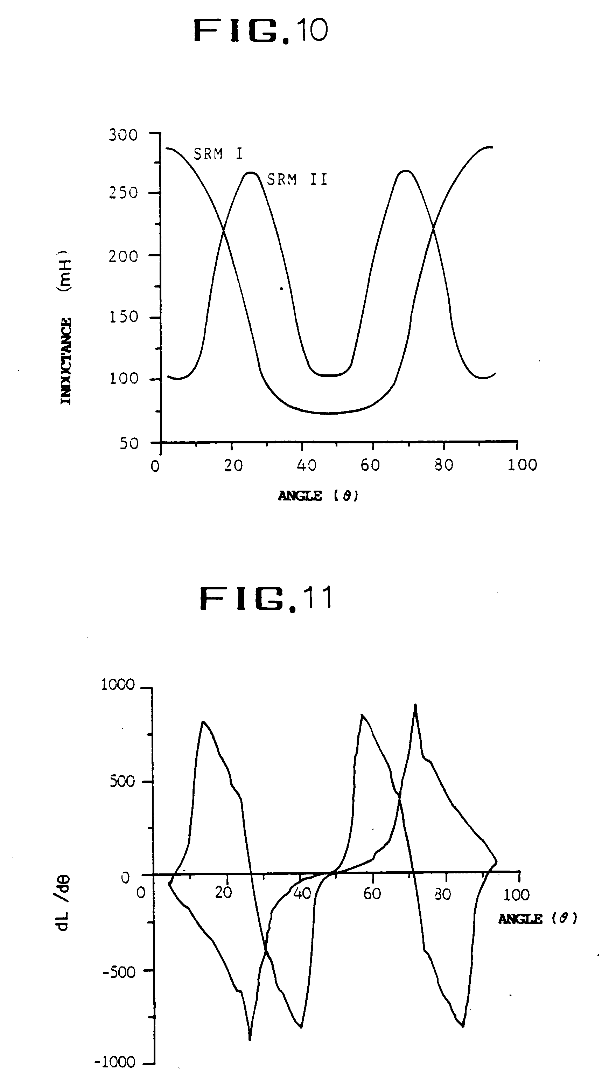

Referring to Figure 10, it can be seen there are two maxima and minima in the plot for SRM II whereas there is only one maxmum and one minimum in the plot for SRM I. However, the amplitude of the inductance variation is smaller for SRM II than for SRM I, implying reduced torque ripple for SRM II.

Referring to Figure 12, it can be seen that the torque produced by SRM II is substantially the same as that produced by SRM I. Furthermore, $\frac{dL}{d\theta}$ for SRM II is smoother than for SRM I, resulting in more smoothly varying torque production and lower noise and vibration.

According to the present invention, torque ripple and therefore also noise and vibration can be reduced by increasing the number of both stator and rotor poles and independently by shaping the rotor poles in the manners described above.

## Claims

1. A switched reluctance motor comprising a stator (3) and a rotor (4), each having a plurality of poles, **characterised in that** the poles of the rotor are configured to smooth output torque as a function of rotor angular position.

**2.** A motor according to claim 1, wherein the rotor poles are chamfered so as to reduce the length of their pole faces in the direction of rotation of the rotor.

**3.** A motor according to claim 1, wherein the rotor poles are flared so as to increase the length of their pole faces in the direction of rotation of the rotor.

**4.** A motor according to claim 1, 2 or 3, having an even number of stator poles greater than 6 and an even number of rotor poles greater than 8.

**5.** A motor according to any preceding claim, having a 12-pole stator and an 8-pole rotor.

**6.** A low noise switched reluctance motor comprising:

a stator having stator poles of 2N multiple in number thereof, where N is a natural number, and windings wound on each pole, wherein each winding is connected in series to each other to provide 360-degree/2N distribution period of torque; and
a rotor having rotor poles of 2N multiple in number thereof.

**7.** The motor of claim 6, wherein a low noise switched reluctance motor comprising rotor poles which have corner portions at their front edges slanted by a predetermined angle.

**8.** The motor of claim 6, wherein a low noise switched reluctance motor comprising rotor poles which have corner portions at their front edges configured as pole shoes.

**9.** A low noise switched reluctance motor having a stator provided with stator poles and a rotor provided with rotor poles comprising:
the rotor poles have corner portions at their front edges slanted by a predetermined angle.

**10.** A low noise switched reluctance motor having a stator provided with stator poles and a rotor provided with rotor poles comprising:
the rotor poles which have corner portions at their front edges configured as pole shoes.

# FIG. 1A
## (PRIOR ART)

# FIG. 1B
## (PRIOR ART)

V_DD    V_SS

# FIG. 2

# FIG.3A

# FIG.3B

# FIG.4

# FIG.5

FIG. 6

# FIG.7

# FIG.8

# FIG.9

# FIG.10

# FIG.11

14